# EUROPÄISCHE PATENTSCHRIFT

(11) **EP 2 469 159 B1**
(45) Veröffentlichungstag und Bekanntmachung des Hinweises auf die Patenterteilung: **14.10.2015**
(21) Anmeldenummer: 11194801.4
(22) Anmeldetag: 21.12.2011
(51) Int. Cl.: F21S 8/00, F21V 5/04, F21V 7/00, F21W 131/202, F21Y 101/02, F21Y 113/00

(54) **Zahnmedizinische Behandlungsleuchte**
Dental treatment light
Eclairage d'examen médico-dentaire

(30) Priorität: 12.05.2011 DE 102011075753; 23.12.2010 DE 102010064095
(43) Veröffentlichungstag der Anmeldung: 27.06.2012
(73) Patentinhaber: Kaltenbach & Voigt GmbH, 88400 Biberach (DE)
(72) Erfinder: Grimm, Michael, 89597 Munderkingen (DE); Sacher, Mathias, 88239 Wangen (DE); Hackel, André, 88400 Biberach (DE); Schumacher, Volker, 88339 Bade Waldsee (DE); Krauel, Markus, 22305 Hamburg (DE)
(74) Vertreter: Thun, Clemens

(56) Entgegenhaltungen:
- WO-A1-02/06723
- DE-A1-102009 005 839
- FR-A1- 2 947 611
- JP-A- 2005 158 699
- US-A1- 2008 239 697
- US-A1- 2009 219 717

## Beschreibung

Die vorliegende Erfindung betrifft eine medizinische, insbesondere zahnmedizinische Behandlungsleuchte.

Um die Qualität von medizinischen Behandlungen zu gewährleisten, ist es unerlässlich, dass die Behandlungsstelle hinreichend ausgeleuchtet ist. Medizinische Behandlungsleuchten sind dementsprechend dazu ausgebildet, die Behandlungsstelle mit einem optimierten Lichtfeld zu beleuchten, das die Behandlungsmethode bzw. den Behandlungsvorgang unterstützt.

Im Falle von zahnmedizinischen Leuchten werden die Eigenschaften dieses optimierten Lichtfelds durch verschiedene Normen festgelegt, wobei die bedeutendste im Moment die EN ISO 9680 ist. Diese sieht beispielsweise vor, dass der Farbwiedergabeindex (CRI, colour rendering index) größer als 85 ist, eine Mindestbeleuchtungsstärke von 8000 1x gegeben ist und das Lichtfeld eine Farbtemperatur zwischen 3000 und 7000 K aufweist.

Darüberhinaus ist zur Vermeidung von Irritationen oder sogar Augenschäden des Patienten in den normativen Festlegungen ebenfalls berücksichtigt, dass das Lichtfeld in Randbereichen hinreichend stark abfällt, sodass in der Objektebene lediglich ein begrenzter Raum um die Behandlungsstelle beleuchtet wird.

Aus der US 2008/0239697 A1 ist eine zahnärztliche Behandlungsleuchte mit einer LED-Lichtquelle bekannt, die mehrere LEDs umfasst. Jeder LED ist dabei jeweils eine Kollimator-Linse zugeordnet. Im Lichtweg den Kollimator-Linsen nachfolgend ist eine Linse angeordnet, die das Licht der LEDs auf eine Objektebene lenkt.

Aus der DE 10 2009 005 839 A1 ist eine Lichtquelle für ein optisches Beobachtungsgerät bekannt. Die Lichtquelle umfasst mehrere LEDs, deren Licht jeweils durch eine Kollektorlinse gebündelt wird. Im Lichtweg den Kollektorlinsen nachfolgend ist eine Kondensorlinse angeordnet, durch die das Licht der LEDs auf ein Eingangsende eines Lichtwellenleiters abgebildet wird. Eine weitere LED-Lichtquelle ist aus der JP 2005-158699 A bekannt.

Aus der WO 02/06723 A1 ist eine zahnärztliche Behandlungsleuchte bekannt, die als Lichtquelle matrixartig angeordnete LEDs aufweist. Das Licht der LEDs wird durch Linsen und Prismen auf eine Objektebene gelenkt, so dass mehrere unterschiedliche Lichtkegel dasselbe Lichtfeld auf der Objektebene ausfüllen.

Aus der US 2009/0219717 A1 ist eine medizinische Leuchte bekannt, bei der das Licht mehrerer LEDs mithilfe von Linsen auf eine Objektebene gelenkt wird.
Aufgabe der vorliegenden Erfindung ist es daher, eine entsprechende medizinische, insbesondere eine zahnmedizinische Behandlungsleuchte zu verbessern, und vorzugsweise eine kompakte Bauform zu ermöglichen, bei der auch Abschattungen einzelner Bereiche der Leuchte kaum wahrnehmbar sind, sodass die Möglichkeiten die Leuchte dem Patienten gegenüber zu positionieren und zu orientieren optimiert sind.

Diese Aufgabe wird mit den Merkmalen der Ansprüche 1 und 2 gelöst, Weiterbildungen der Erfindung sind Gegenstand der abhängigen Ansprüche.

Erfindungsgemäß ist eine medizinische, insbesondere zahnmedizinische Behandlungsleuchte vorgesehen, mit einer Anordnung zur Erzeugung eines Lichtfelds in einer Objektebene. Die Anordnung zur Erzeugung eines Lichtfeldes weist eine LED-Lichtquelle, erste optische Mittel sowie, im Lichtweg nachfolgend angeordnet, zweite optische Mittel auf, wobei die zweiten optischen Mittel dazu ausgebildet sind, mehrere Teilstrahlenbündel des von der LED-Lichtquelle abgegebenen Lichts so umzuformen, dass jedes Teilstrahlenbündel in der Objektebene das gesamte Lichtfeld überlagert bzw. beleuchtet, wobei die LED-Lichtquelle eine im Wesentlichen punktförmige Lichtquelle bildet.

Erfindungsgemäß umfassen die zweiten optischen Mittel eine Vielzahl von Linsen, wobei jede Linse jeweils ein Teilstrahlenbündel des von der im Wesentlichen punktförmigen LED-Lichtquelle abgegebenen Lichts auf das gesamte Lichtfeld in der Objektebene projiziert. Der Gedanke - abgesehen von der Beleuchtungsstärke - alle Eigenschaften des Lichtfelds durch Teillichtbündel des von der Lichtquelle erzeugten Lichts festzulegen, wird so auf einfache Weise realisiert.
Bevorzugt sind die ersten optischen Mittel zur Kollimation des von der LED-Lichtquelle abgestrahlten Lichts und vorzugsweise zur Parallelrichtung des Lichts der im Wesentlichen punktförmigen Lichtquelle ausgebildet, insbesondere kann es sich um erste optische Mittel handeln, die eine homogene Lichtabstrahlung über eine relativ große Fläche ermöglichen, beispielsweise einen Lichtleiter oder eine Streuscheibe, wobei im Rahmen des Erfindungsgedankens eine Kombination all dieser Merkmale nicht ausgeschlossen ist.

Die erfindungsgemäße Ausgestaltung einer medizinischen oder zahnmedizinischen Behandlungsleuchte bringt eine Reihe von Vorteilen mit sich. Insbesondere ist eine Folge der Erzeugung des Lichtfeldes durch mehrere Lichtbündel, die das Lichtfeld vollständig überlagern bzw. beleuchten, dass die Abschattung einzelner Lichtbündel im Lichtfeld kaum wahrnehmbar ist. Dies bedingt vielfältige Freiheitsgrade bei der Platzierung der Leuchte, ohne dass störende Schatteneffekte wahrnehmbar sind und die Behandlungsstelle optimal ausgeleuchtet ist. Weitere Vorteile werden insbesondere im Zusammenspiel mit bevorzugten Weiterbildungen der erfindungsgemäßen Leuchte deutlich.

Ein weiterer Aspekt der Erfindung, der die Bildung störender Schatteneffekte ebenfalls unterdrückt, betrifft eine medizinische, insbesondere zahnmedizinische Behandlungsleuchte mit einer Anordnung zur Erzeugung eines Lichtfelds in einer Objektebene. Die Anordnung zur Erzeugung eines Lichtfeldes weist eine LED-Lichtquelle, erste optische Mittel sowie, im Lichtweg nachfolgend angeordnet, zweite optische Mittel auf. Die zweiten optischen Mittel sind dazu ausgebildet, mehrere Teilstrahlenbündel des von der LED-Lichtquelle abgegebenen Lichts so umzuformen, dass sich die Teilstrahlenbündel in der Objektebene überlagern, wobei die Kombination der Teilstrahlenbündel das gesamte Lichtfeld bildet, wobei die LED-Lichtquelle eine im Wesentlichen punktförmige Lichtquelle bildet.

Erfindungsgemäß überlappen sich jeweils wenigstens zwei Teilstrahlenbündel in der Objektebene, beispielsweise so, dass jeder Punkt des Lichtfeldes in der Objektebene durch wenigstens zwei Teilstrahlenbündel beleuchtet wird.

Erfindungsgemäß ist dies dadurch realisiert, dass die zweiten optischen Mittel eine Vielzahl von Linsen umfassen. Jede Linse projiziert dabei jeweils ein Teilstrahlenbündel auf das Lichtfeld, wobei die Linsen dazu ausgebildet sind, die Teilstrahlenbündel des von der im Wesentlichen punktförmigen LED-Lichtquelle abgegebenen Lichts so auf das Lichtfeld in der Objektebene zu projizieren, dass sich wenigstens zwei der Teilstrahlenbündel überlappen. Bevorzugt ist dies für jedes der Teilstrahlenbündel realisiert; d. h. jedes der Teilstrahlenbündel überlappt mit wenigstens einem weiteren der Teilstrahlenbündel.

In all diesen Weiterbildungen lässt sich durch eine hohe Anzahl von Linsen, beispielsweise mehr als 10 Linsen/cm2, die Anfälligkeit gegen Abschattungen weiter reduzieren.

Beispielsweise könnte die Vielzahl von Linsen durch ein einstückiges Bauteil realisiert sein und so die geometrische Zuordnung der einzelnen Linsen zueinander festgelegt sein. Dieses Bauteil kann vorzugsweise als Mikrolinsenarray ausgebildet sein, jedoch ist die Erfindung nicht auf diesen Fall beschränkt, beispielsweise könnten die Linsen oder einzelne Elemente der zweiten optischen Mittel flexibel gegenüber einander angeordnet sein. Ein Ausführungsbeispiel das beide Merkmale verwirklicht ist beispielsweise durch eine wenigstens teilweise Gestaltung als Folie denkbar.

Bevorzugt weist das Lichtfeld im Wesentlichen die Form eines Polygonzuges, insbesondere eines Rechtecks, eines Trapezes, einer Raute oder eines Hexagons auf. Im Wesentlichen bedeutet in diesem Zusammenhang, dass einzelne Teilabschnitte des Polygonzugs zwischen Verbindungspunkten des Polygons durchaus gewölbte Abschnitte aufweisen können, wobei die Wölbung in dem Teilabschnitt eine Vorzugsrichtung aufweist, welche sich von der entsprechenden Vorzugsrichtung eines benachbarten Teilabschnitts unterscheidet.

Als besonders vorteilhaft erweist sich, wenn sich die Form des Lichtfeldes in der Umfangsrandlinie einer entsprechenden Linse zur Erzeugung eines Lichtfeldes in einer Objektebene aus Teilstrahlenbündeln des von der LED-Lichtquelle abgegebenen Lichts wiederspiegelt. Somit wird auf einfache Weise die Möglichkeit geschaffen, abschnittsweise gerade Randlinien bei einer Linsenanordung zu realisieren.

Mit Hilfe abschnittsweise gerader Randlinien, wie sie beispielsweise durch eine oben beschriebene polygone Form, in diesem Fall einer Linse, verwirklicht werden, ist es möglich die Packungsdichte entsprechender Linsen zu erhöhen. Damit kann beispielsweise ein zusammenhängender Bereich einer Oberfläche der zweiten optischen Mittel realisiert werden, der von mehreren Teilstrahlenbündeln der LED-Lichtquelle bestrahlt wird, wobei bevorzugt jedes der Teilstrahlenbündel in dem Bereich in der Objektebene das gesamte Lichtfeld beleuchtet bzw. die Teilstrahlenbündel in der Objektebene überlappen. Der entsprechende Bereich zeigt also keine Lücken, in denen Teilstrahlenbündel hindurchtreten, die nicht das gesamte Lichtfeld überlagern bzw. beleuchten oder in der Objektebene überlappen. Vorzugsweise umfasst der Bereich wenigstens drei Teilstrahlenbündel.

In einer Weiterentwicklung ist die Anordnung zur Erzeugung eines Lichtfelds in einer Objektebene dazu ausgebildet, ein Lichtfeld zu erzeugen, das in der Objektebene Bereiche verschiedener Beleuchtungsstärken aufweist. Insbesondere ist hervorzuheben, dass bevorzugt jedes Teilstrahlenbündel des von der LED-Lichtquelle erzeugten Lichts diese Eigenschaft aufweist, sodass beispielsweise jedes Teilstrahlenbündel, abgesehen von der Gesamtbeleuchtungsstärke, ein normgerechtes Lichtfeld repräsentieren kann, also insbesondere jedes Teilstrahlenbündel wenigstens zwei Bereiche unterschiedlicher Beleuchtungsstärke in der Objektebene erzeugt.

In einem weiteren Aspekt der Erfindung umfasst die LED-Lichtquelle mehrere LEDs, welche vorzugsweise dazu ausgebildet sind, verschiedene Lichtfarben bzw. Licht mit zueinander verschiedenen Farborten abzustrahlen. Die erfindungsgemäße Ausgestaltung der Behandlungsleuchte weist somit gleichzeitig das Merkmal eines Lichtmischsystems auf, welches dazu ausgebildet ist, das Licht unterschiedlicher Leuchtmittel zu mischen. Eine Möglichkeit dieses Lichtmischsystem zu optimieren, ist beispielsweise durch die Kombination der LED-Lichtquelle mit ersten optischen Mitteln zur Kollimation des von der LED-Lichtquelle abgegebenen Lichts gegeben. Besonders vorteilhaft ist das Lichtmischsystem damit innerhalb der Behandlungsleuchte bzw. der Anordnung zur Erzeugung eines Lichtfelds verwirklicht, sodass eine verbesserte Unempfindlichkeit gegenüber Abschattungseffekten daraus erwächst.

Vorzugsweise ist die LED-Lichtquelle eine LED-Gruppe bzw. ein LED-Cluster.

Bei der Ausgestaltung, dass die LED-Lichtquelle eine im Wesentlichen punktförmige Lichtquelle bildet, ist im Wesentlichen so aufzufassen, dass eine zentralsymmetrische Anordnung (Gruppe) mehrerer LEDs resultiert, welche nur durch die Ausmaße einzelner LEDs bedingte Abweichungen von der Zentralsymmetrie aufweist. Insbesondere ist festzuhalten, dass die erfindungsgemäße Ausgestaltung der Leuchte die Kombination mit einer kompakten Lichtquelle ermöglicht, beispielsweise realisiert durch das beschriebene LED-Cluster.

Beispielsweise kann vorgesehen sein, dass die Anzahl der mit Hilfe der zweiten optischen Mittel abgestrahlten Teillichtbündel die Anzahl der LEDs der LED-Lichtquelle übersteigt. Beispielsweise kann dazu die Packungsdichte pro Flächeneinheit von einzelnen LEDs die Packungsdichte von Linsen pro Flächeneinheit der zweiten optischen Mittel unterschreiten, bevorzugt um eine Größenordnung besonders bevorzugt um wenigstens zwei Größenordnungen.

Besonders bevorzugt ist einer oder mehrerer der LEDs, im Lichtweg nachfolgend angeordnet, ein Farbfilter, beispielsweise ein optischer Hochpassfilter, der lediglich für Licht mit einer größeren Wellenlänge als 520nm transparent ist, zugeordnet. Damit kann beispielsweise ein sogenannter "Non-Curing-Modus" der Lichtabgabe realisiert werden, der ein Aushärten von zahnmedizinischen Materialien nicht beschleunigt.

In einer Weiterbildung ist der Filter fest im Lichtweg angeordnet; eine kompakte Bauform kann beispielsweise dadurch weiterhin gefördert werden, dass der Farbfilter beispielsweise direkt mit einer oder mehreren LEDs verbunden ist. Bevorzugt handelt es sich bei den LEDs um chip on board LEDs oder in SMD Technik mit einem Träger verbindbare LEDs, die zunächst ohne vergossene Primäroptik mit dem Träger, beispielsweise einer Trägerplatine, verbindbar sind.

Der Filter kann in diesem Fall besonders einfach im Lichtweg fest angeordnet sein, dass mehrere LEDs gemeinsam mit einem transparenten Vergußmittel, beispielsweise einem Harz, abgedeckt sind und der Filter ebenfalls mit Hilfe des Vergussmittels vor den zugeordneten LEDs angeordnet ist.

Vorzugsweise ist die Anordnung zur Erzeugung eines Lichtfelds als zusammenhängende Baugruppe ausgeführt, wobei bevorzugt die zweiten optischen Mittel mit den ersten optischen Mitteln verbunden sind. In einer Weiterbildung kann diese Verbindung auch reversibel lösbar ausgebildet sein, beispielsweise mittels einer Rastverbindung.

Weiterhin kann vorgesehen sein, dass die ersten optischen Mittel direkt mit der LED-Lichtquelle bzw. einer vorzugsweise ebenen Trägerplatine für die LED-Lichtquelle verbunden sind.

Ferner ist denkbar, dass die ersten optischen Mittel dazu ausgebildet sind, einen Anteil des von der LED-Lichtquelle abgegebenen Lichts aus dem Lichtweg zu den zweiten optischen Mitteln auszukoppeln, wobei bevorzugt die Auskopplung mit Hilfe eines Lichtleiters erfolgt.

Beispielsweise kann die zahnärztliche Behandlungsleuchte Mittel zur Bestimmung des Farbortes des abgegebenen Lichts aufweisen, welche vorzugsweise außerhalb des von der LED-Lichtquelle zur Objektebene gerichteten Lichtweges angeordnet sind. Wie bereits angedeutet, könnten entsprechend ausgebildete erste optische Mittel das zur Analyse des Farbortes berücksichtigte Licht aus dem Lichtweg von der LED-Lichtquelle zur Objektebene auskoppeln.

In einer Weiterbildung ist vorgesehen, dass die zahnärztliche Behandlungsleuchte Mittel zur Regelung bzw. Steuerung des Farbortes des abgegebenen Lichts aufweist. Beispielsweise kann die Beleuchtungsstärke einzelner LEDs geregelt bzw. gesteuert sein, vorzugsweise durch eine pulsbreitenmodulierbare elektrische Versorgung der LEDs. Insbesondere kann die Überprüfung des Farbortes in zeitlich regelmäßigen Abständen erfolgen, um beispielsweise eine zeitliche Veränderung der Lichtabgabe der LED-Lichtquelle zu berücksichtigen.

Ein weiteres Ausführungsbeispiel sieht vor, dass die medizinische bzw. zahnmedizinische Leuchte wenigstens eine weitere Lichtquelle aufweist. Beispielsweise könnte neben der Anordnung zur Erzeugung eines Lichtfelds in einer Objektebene vorgesehen sein, dass LED-Lichtquellen, Gasentladungslampen, Leuchtstoffröhren oder Halogenlichtquellen mit der Leuchte kombiniert sind.

Vorzugsweise ist die weitere Lichtquelle durch eine vorbeschriebene LED-Lichtquelle realisiert, die beispielsweise ebenfalls einer erfindungsgemäßen Anordnung zur Erzeugung eines Lichtfelds in einer Objektebene zugeordnet sind.

In einer Weiterbildung des Erfindungsgedankens erzeugen die Lichtquellen ein gemeinsames Lichtfeld in der Objektebene und vorzugsweise überlagern bzw. beleuchten die Lichtquellen in der Objektebene ausschließlich das gemeinsame Lichtfeld.

Nachfolgend soll die Erfindung anhand der beiliegenden Zeichnung näher erläutert werden, wobei gleiche Elemente in allen Darstellungen mit den gleichen Bezugszeichen versehen sind. Es zeigen:
- Fig. 1: eine erfindungsgemäße zahnärztliche Behandlungsleuchte;
- Fig. 2: eine schematische Darstellung einer Anordnung zur Erzeugung eines Lichtfeldes in einer Objektebene;
- Fig. 3: ein Ausführungsbeispiel für ein erstes optisches Mittel;
- Fig. 4: ein Ausführungsbeispiel einer Anordnung zur Erzeugung eines Lichtfeldes in einer Objektebene;
- Fig. 5: eine als zusammenhängende Baugruppe ausgebildete Anordnung zur Erzeugung eines Lichtfeldes in einer Objektebene in einer Explosionsdarstellung;
- Fig. 6: eine schematische Darstellung zur Erzeugung eines Lichtfeldes;
- Fig. 7: ein Ausführungsbeispiel zur Auskoppelung von Licht aus der Anordnung zur Erzeugung eines Lichtfeldes in einer Objektebene; und
- Fig. 8: ein Ausführungsbeispiel für die Anordnung von Lichtleitern und Sensormitteln.

Medizinische und insbesondere zahnmedizinische Behandlungsleuchten müssen einerseits die Qualität der Behandlung und andererseits auch das Wohlbefinden des Patienten fördern. Die daraus resultierenden Anforderungen sind in einer Reihe von Normen dokumentiert. Eine besondere Schwierigkeit stellt dabei die Erzeugung eines Lichtfeldes dar, welches die Behandlungsstelle optimal beleuchtet, gleichzeitig aber vermeidet, dass der Patient oder der Behandelnde einer zu großen thermischen Belastung oder Gefahren durch intensives ins Auge treffendes Licht ausgesetzt ist. Unter Berücksichtigung dessen liegt es auf der Hand, dass eine exakte Positionierung der Leuchte in Relation zur Behandlungsstelle wesentliche Vorteile mit sich bringt, wobei stets zu berücksichtigen ist, dass eine möglicherweise optisch bzw. thermisch ideale Positionierung den Bewegungsspielraum des Behandelnden gegebenenfalls stark einschränken kann. Ein signifikanter Vorteil für die Qualität der Behandlung erwächst deshalb mit einer Leuchte, die in der Lage ist, die Behandlungsstelle ohne wesentliche Empfindlichkeit auf abschattende Hindernisse im Strahlengang zwischen Leuchte und Behandlungsstelle optimal zu beleuchten und so die Bewegungsfreiheit des Behandelnden zu erhöhen.

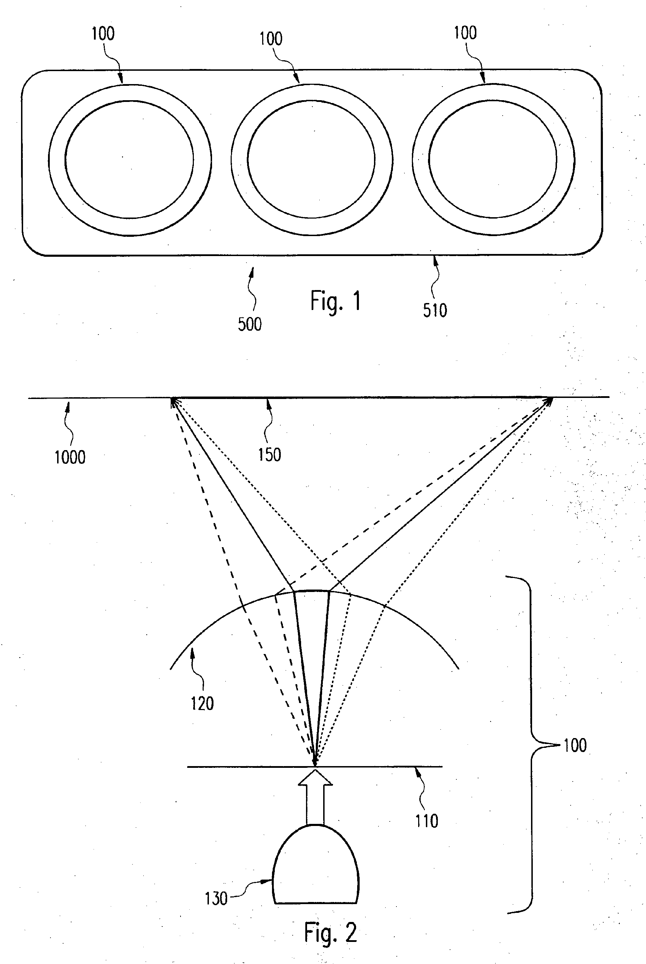

Figur 1 zeigt eine erfindungsgemäße zahnmedizinische Behandlungsleuchte 500 gemäß Norm ISO EN 9680, mit einem Gehäuse 510, das vorzugsweise geschlossen ist, und eine nicht dargestellte Abdeckung einer der Behandlungsstelle zugewandten Lichtaustrittsfläche aufweist. Diese vorzugsweise transparente Abdeckung kann zur Entspiegelung mit einer entsprechenden Beschichtung, beispielsweise einer Aufdampfschicht versehen sein bzw. zur Vermeidung einer Blendwirkung nicht transparente Abschnitte aufweisen, sodass eine Winkelbegrenzung des aus der Leuchte austretenden Lichts realisiert ist.

Darüberhinaus sind in diesem Ausführungsbeispiel drei erfindungsgemäße Anordnungen 100 zur Erzeugung eines Lichtfeldes in einer Objektebene vorgesehen; im Rahmen des Erfindungsgedanken ist diese Anzahl jedoch an die gewünschte Beleuchtungsstärke bzw. an thermische Rahmenbedingungen anpassbar.

Ein bevorzugtes, nicht näher dargestelltes Ausführungsbeispiel sieht beispielsweise eine zahnmedizinische Behandlungsleuchte mit fünf erfindungsgemäßen Anordnungen 100 zur Erzeugung eines Lichtfeldes in einer Objektebene vor. Diese sind bevorzugt in mehreren Zeilen angeordnet. Beispielsweise weist eine erste obere Zeile drei Anordnungen 100 zur Erzeugung eines Lichtfeldes 150 in einer Objektebene 1000 auf, eine weitere untere Zeile zwei. Vorzugsweise kann auch eine matrizenartige Ausrichtung der Anordnungen 100 gewählt werden. Damit kann eine vorteilhafte Ausrichtung auf ein Lichtfeld 150 in einer Objektebene erzielt werden, sodass dieses mit hervorragender Lichtstärke beleuchtet wird; gleichzeitig können dabei kompakte Abmessungen der Behandlungsleuchte erreicht werden.

Figur 2 zeigt eine schematische Darstellung der Wirkungsweise der Anordnung 100 zur Erzeugung eines Lichtfeldes 150 in einer Objektebene 1000. Erfindungsgemäß weist die Anordnung 100 zur Erzeugung eines Lichtfeldes 150 in einer Objektebene 1000 eine LED-Lichtquelle 130, sowie erste optische Mittel 110 und im Lichtweg nachgeordnete zweite optische Mittel 120 auf, um ein Lichtfeld 150 in einer Objektebene 1000 zu erzeugen. Die zweiten optischen Mittel 120 sind erfindungsgemäß dazu ausgebildet, mehrere Teilstrahlenbündel des von der LED-Lichtquelle 130 abgegebenen Lichts so umzuformen, dass jedes Teilstrahlenbündel in der Objektebene 1000 das gesamte Lichtfeld 150 überlagert bzw. beleuchtet.

Mit dieser Anordnung ergibt sich in Kombination eine Reihe von Vorteilen. Zunächst kann die Verwendung einer LED-Lichtquelle 130 die Wärmeabstrahlung der Behandlungsleuchte 500 signifikant gegenüber einem Modell mit vergleichbarer Beleuchtungsstärke, erzeugt durch konventionelle Leuchtmittel, verringern. Darüberhinaus ist eine Unempfindlichkeit des Lichtfeldes 150 in der Objektebene 1000 gegenüber Abschattungen im Lichtweg gegeben. Mit Hilfe der zweiten optischen Mittel 120 wird das Licht einer LED-Lichtquelle 130 in unterschiedliche Lichtwege aufgeteilt, deren Ursprung im Bereich der zweiten optischen Mittel virtuelle Lichtquellen festlegt, die vorzugsweise dazu ausgebildet sind, die Form und Beleuchtungsstärkeunterschiede des Lichtfeldes 150 nachzubilden. Bei einer großen Anzahl von virtuellen Lichtquellen bedeutet die Abschattung des Lichtwegs von wenigen virtuellen Lichtquellen einen kaum merklichen Verlust in der Gesamtbeleuchtungsstärke und zudem ist die räumliche Ausprägung eines Schattenmusters vermieden. Somit ist die Behandlungsleuchte 500 weitgehend unempfindlich gegenüber lokalen Abschattungen, sodass der Bewegungsspielraum des Behandelnden optimiert ist.

Eine ähnlicher Effekt kann beispielweise durch einen weiteren Aspekts der Erfindung auch dadurch erreicht werden, dass die zweiten optischen Mittel 120 dazu ausgebildet sind, mehrere Teilstrahlenbündel des von der LED-Lichtquelle 130 abgegebenen Lichts so umzuformen, dass sich die Teilstrahlenbündel in der Objektebene 1000 überlagern, wobei die Kombination der Teilstrahlenbündel das gesamte Lichtfeld 150 bildet.

Bevorzugt ist vorgesehen, dass jeder Punkt des Lichtfeldes 150 von wenigstens zwei Teilstrahlenbündeln beleuchtet ist, sodass Abschattungseffekte besonders effizient unterdrückt werden können.

Unterstützung kann dieses Konzept beispielsweise dadurch erfahren, dass die Anzahl der umgeformten Teilstrahlenbündel bzw. der in der Objektebene überlappenden Teilstrahlenbündel, also beispielsweise die Anzahl der virtuellen Lichtquellen ausreichend groß gewählt wird. Beispielsweise kann vorgesehen sein, dass jede LED-Lichtquelle 130 wenigstens drei der erwähnten Teilstrahlenbündel erzeugt, bevorzugt wenigstens zehn und besonders bevorzugt wenigstens 1000. Ein nicht dargestelltes Ausführungsbeispiel sieht beispielsweise 40.000 virtuelle Lichtquellen bzw. Teilstrahlenbündel auf einer Kreisfläche mit einem Radius von 70mm vor.

Als besonders vorteilhaft erweist sich, wenn die Teilstrahlenbündel eine - abgesehen von geringen Abweichungen - identische Beleuchtungsstärkeanteile zur Gesamtbeleuchtungsstärke beitragen. Dies kann beispielsweise durch das Zusammenspiel mit ersten optischen Mitteln 110 realisiert sein, die vorzugsweise ein homogenes Lichtfeld erzeugen.

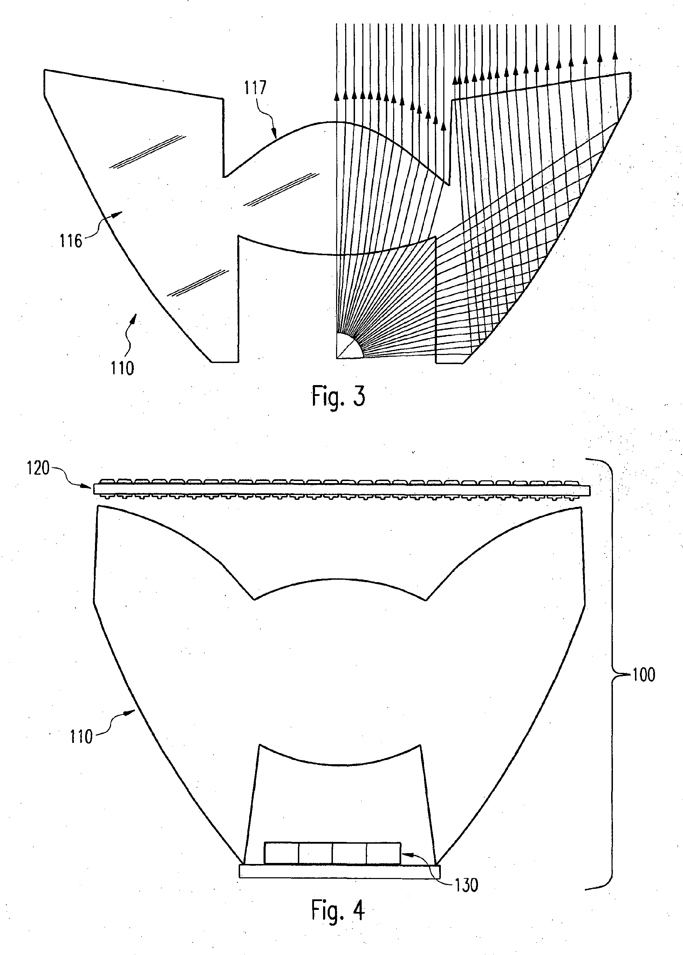

Eine in Figur 3 dargestellte Weiterbildung der Erfindung weist erste optische Mittel auf, die zur Kollimation des von der LED-Lichtquelle 130 abgegebenen Lichts ausgebildet sind. Das Ausführungsbeispiel zeigt eine hohlzylinderartige Linse 116, deren Deckfläche von einer Sammellinse 117 abgeschlossen ist. Die Zylinderlinse 116 weist ferner keinen homogenen Querschnitt über die Länge des Zylinders auf; vielmehr nimmt der Querschnitt des Zylinders mit dessen Länge zu, vorzugsweise in der Art, dass die äußere Seite der Mantelfläche annähernd parabolische Form aufweist. Wie anhand der angedeuteten Lichtführung deutlich wird, können die Mantelflächen der Zylinderlinse 116, neben Lichtleitungseigenschaften in weitgehend zylindrischen Abschnitten, auch Reflektoreigenschaften aufweisen. Bevorzugt können so erste optische Mittel 110 dazu vorgesehen sein, den Austrittswinkel des von der LED-Lichtquelle 130 abgegebenen Lichts zu begrenzen.

Vorzugsweise können die Reflektoreigenschaften durch Totalreflektion an der Grenzfläche zu einem optisch dünneren Medium realisiert sein. Darüberhinaus ist aber auch denkbar, dass die Mantelflächen der Zylinderlinse 116, wenigstens abschnittsweise, verspiegelt sind. In einem Ausführungsbeispiel weist eine entsprechende Reflexionsschicht weitgehend transparente Eigenschaften für Infrarotstrahlung auf, um so die Wärmeabstrahlung der Behandlungsleuchte und das Temperaturmanagement innerhalb des Leuchtengehäuses 510 zu optimieren.

Wie aus dem dargestellten Strahlenverlauf ersichtlich ist, sind erste optische Mittel 110, in diesem Fall repräsentiert durch die Zylinderlinse 116, vorzugsweise dazu ausgebildet, die Lichtabstrahlung einer im Wesentlichen punktförmigen Lichtquelle annähernd parallel zu richten. Die Kombination zu erfindungsgemäßen zweiten optischen Mitteln 120 verwirklicht so ein Lichtmischsystem für eine punktförmige Lichtquelle.

Eine vorteilhafte Ausgestaltung der Anordnung 100 zur Erzeugung eines Lichtfeldes 150 in einer Objektebene 1000, die dieses Konzept unterstreicht, wird im dem in Figur 4 gezeigten Ausführungsbeispiel deutlich. Die Anordnung weist eine Zylinderlinse 116 ähnlich der vorbeschriebenen Art auf. Am Ort des durch die parabolischen Mantelflächen festgelegten Brennpunkts der Linse ist eine LED-Lichtquelle 130, repräsentiert durch eine Gruppe von LEDs, angeordnet. Darüberhinaus ist es zur Erzeugung einer homogenen Lichtabstrahlung aus ersten optischen Mitteln 110 förderlich, wenn der durch die Mantelflächen festgelegte Brennpunkt mit dem Brennpunkt der Sammellinse 117 übereinstimmt. Die beschriebene Zylinderlinse 116 ist somit besonders geeignet, das Licht einer punktförmigen Lichtquelle zu sammeln, parallel zur richten, ein weitgehend homogenes Lichtfeld zu erzeugen, den Lichtaustrittswinkel zu begrenzen und darüberhinaus gleichzeitig eine Abdeckung für die Lichtquelle zu realisieren, welche die Kombination aus Linse und LED-Lichtquelle 130 abschließt.

Die LED-Lichtquelle 130 ist vorzugsweise eine im Wesentlichen punktförmige LED-Lichtquelle 130; sie kann dabei mehrere LED-Leuchtmittel 131 umfassen, die beispielsweise dazu ausgebildet sind, Licht unterschiedlicher Farborte abzustrahlen. Jedoch kann auch vorgesehen sein, dass mehrere LED-Leuchtmittel der LED-Lichtquelle 130 den gleichen Farbort aufweisen. Die LED-Lichtquelle 130, bevorzugt integriert in eine Anordnung 100 zur Erzeugung eines Lichtfeldes 150 in einer Objektebene 1000, ist vorzugsweise dazu ausgebildet weißes Licht mit einer Farbtemperatur zwischen 3000 und 7000 K abzustrahlen, wie es beispielsweise der Norm ISO EN 9680 entspricht. Zu Behandlungszwecken kann es förderlich sein, dass Licht bestimmter Wellenlängenanteile ausgefiltert wird. Beispielsweise kann es sich bei dem ausgefilterten Wellenlängenanteil um den Blau (< 520nm), Violett bzw. UV-Anteil handeln, der eine Wellenlänge einschließt, welche die Aushärtung von zahnärztlichen Behandlungsmaterialien bewirkt. Bevorzugt wird dies durch Abschaltung von LED-Leuchtmitteln 131 erreicht, sodass lediglich LED-Leuchtmittel 131 angeschaltet bleiben, die den gefilterten Wellenlängenanteil nicht einschließen.

Dies kann beispielsweise dadurch sichergestellt sein, dass über einem Teil der LED-Leuchtmittel 131, beispielsweise einzelnen LEDs oder auch allen in diesem Fall aktivierten LEDs, ein Farbfilter - bevorzugt fest - angeordnet ist, der für Licht mit einer Wellenlänge kleiner als 520 nm Filtereigenschaften aufweist, während er für Licht anderer Wellenlängen nahezu transparent ist, also einen optischen Hochpass verwirklicht.

Somit kann die mechanische Bewegung eines optischen Filters in den Lichtweg von LED-Lichtquelle 130 zur Objektebene 1000 vermieden werden. Insbesondere kann ein sogenannter "Non-Curing-Modus" vorgesehen sein, der die Lichtabgabe mit einer Wellenlänge kleiner als 520nm, bevorzugt kleiner als 500nm, ausschließt.

Die Anordnung 100 zur Erzeugung eines Lichtfeldes 150 in einer Objektebene 1000 verwirklicht in diesem Ausführungsbeispiel ein Lichtmischsystem, sodass die normgerechte Lichtabstrahlung mit LED-Leuchtmitteln 131 unterschiedlicher Farborte realisiert werden kann.

Die zweiten optischen Mittel 120 sind in diesem Ausführungsbeispiel durch ein im Lichtweg den ersten optischen Mitteln 110 nachgeordnetes Mikrolinsenarray repräsentiert, das in dem beschriebenen Lichtmischsystem durch weitgehend homogenes Licht, abgestrahlt von ersten optischen Mitteln 110, beleuchtet wird. Das Mikrolinsenarray weist eine Vielzahl von Linsen 125 auf, wobei - jede für sich betrachtet - ein Teillichtbündel der LED-Lichtquelle 130 so umformt, dass es das gesamte Lichtfeld 150 in der Objektebene 1000 überlagert bzw. beleuchtet.

In einem anderen Ausführungsbeispiel könnte jedoch auch vorgesehen sein, dass das Mikrolinsenarray eine Vielzahl von Linsen 125 aufweist, wobei die Linsen 125 dazu ausgebildet sind, die Teilstrahlenbündel des von der LED-Lichtquelle 130 abgegebenen Lichts so auf das Lichtfeld 150 in der Objektebene 1000 zu projizieren, dass sich wenigstens zwei Teilstrahlenbündel überlappen. Insbesondere können die Linsen so ausgebildet sein, dass jeder Punkt des Lichtfeldes 150 von wenigstens zwei Teilstrahlenbündeln beleuchtet ist, wobei jede Linse jeweils eines der Teilstrahlenbündel umformt bzw. abstrahlt.

Bevorzugt sind die Linsen 125 so angeordnet, dass alle lichtabstrahlenden Flächen des Mikrolinsenarrays Bestandteil einer Linse 125 sind, also wie oben angedeutet, Bestandteil einer virtuellen Lichtquelle im Sinne der Erfindung sein können. Aus einem anderen Blickwinkel betrachtet bedeutet dies, dass ein entsprechendes Mikrolinsenarray kein Lichtbündel aus einer Lücke in der Linsenanordnung abstrahlt, das nicht das gesamte Lichtfeld 150 beleuchtet bzw. das in der Objektebene 1000 nicht mit einem weiteren abgestrahlten Lichtbündel überlappt.

Dies kann beispielsweise dadurch erreicht werden, dass die Linsen 125 in einem Wabenmuster also in hexagonaler Form angeordnet sind. Jedoch sind auch andere Polygonzüge denkbar, um ebenfalls eine vollständig zusammenhängende Linsenanordnung von nahezu identischen Einzellinsen 125 zu erreichen, beispielsweise könnte dies ein Pentagonmuster oder eine rechteckige Anordnung sein.

Vorzugsweise kann die Randlinie des erzeugten Lichtfeldes 150 in einer Objektebene 1000 durch einen Polygonzug beschrieben werden. Beispielsweise kann vorgesehen sein, dass das Lichtfeld im Wesentlichen die Form eines Rechtecks, eines Trapezes, einer Raute, eines Pentagons oder eines Hexagons aufweist.

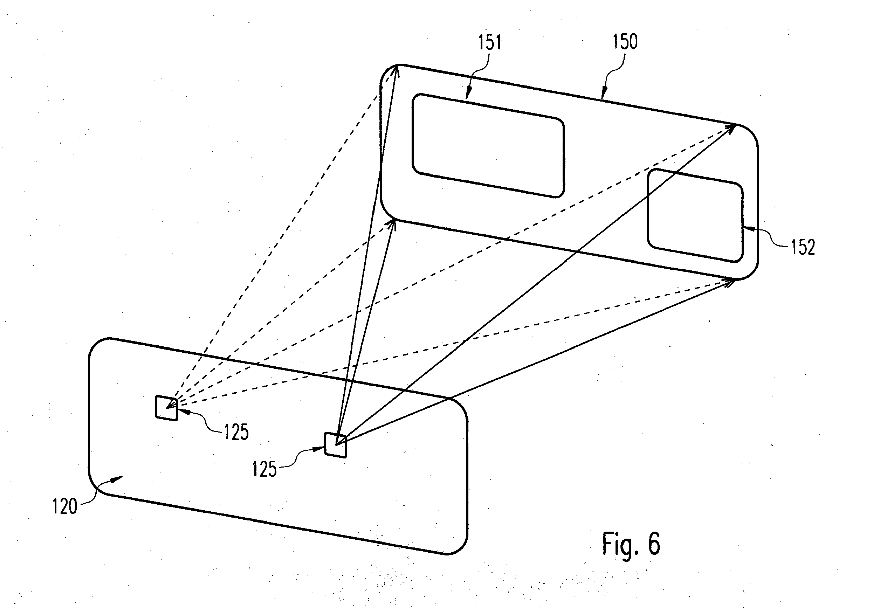

Im Rahmen einer Weiterbildung der Erfindung kann das Lichtfeld 150 Bereiche aufweisen, die sich in der Beleuchtungsstärke voneinander unterscheiden, wie dies beispielsweise in Figur 6 dargestellt ist. Dabei ist insbesondere darauf hinzuweisen, dass die zweiten optischen Mittel in diesem Ausführungsbeispiel dazu ausgebildet sind, jedes der umgeformten Lichtbündel so auszugestalten, dass es in der Objektebene 1000 Bereiche 151, 152 unterschiedlicher Beleuchtungsstärke aufweist. Insbesondere könnten diese Bereiche 151, 152 die Form der Randlinie des Lichtfeldes 150 aufweisen.

In dem gezeigten Ausführungsbeispiel von Figur 4 sind die zweiten optischen Mittel 120 einstückig ausgeführt, beispielsweise als Spritzgussteil, vorzugsweise aus einem wenigstens teilweise transparenten, besonders bevorzugt autoklavierbaren Kunststoff, der die Vorteile einer hohen thermischen Formfestigkeit mit einer leichten Reinigung verbindet. Jedoch ist auch die Verwendung von Glasmaterial für die zweiten optischen Mittel 120 denkbar.

Weiterhin ist darauf hinzuweisen, dass sich die angeführten Materialen ebenfalls für Ausführungen des Leuchtengehäuses 510, der Abdeckung der Lichtaustrittsfläche sowie der ersten optischen Mittel 110 eignen.

In einer vorteilhaften Weiterbildung ist vorgesehen, dass die zweiten optischen Mittel 120 folienartig ausgebildet sind, und vorzugsweise kann diese Folie mit den ersten optischen Mitteln 110 verklebt sein. Beispielsweise kann auch eine einteilige Ausgestaltung der ersten und zweiten optischen Mittel 110 bzw. 120 eine kompakte Anordnung realisieren, so dass wenigstens zwei unterschiedliche optische Eigenschaften in einem optischen Bauteil verwirklicht sind. Darüberhinaus können weitere Möglichkeiten vorgesehen sein, die ersten und zweiten optischen Mittel 110, 120 mit einander verbunden auszugestalten.

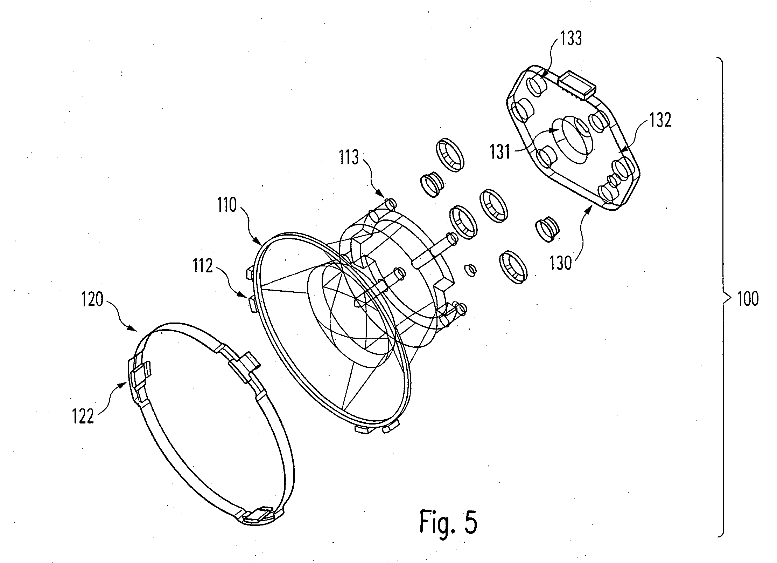

Eine entsprechende Weiterbildung ist beispielsweise in Figur 5 dargestellt. Die ersten und zweiten optischen Mittel 110 bzw. 120 weisen jeweils korrespondierende Befestigungsmittel 112 bzw. 122 auf, die dazu ausgebildet sind, die ersten und zweiten optischen Mittel 110 bzw. 120 miteinander zu verbinden. Insbesondere kann diese Verbindung reversibel lösbar gestaltet sein. Vorzugsweise handelt es sich dabei um Rastmittel, wobei es sich in diesem Fall anbietet, mindestens eines der ersten oder zweiten optischen Mittel 110, 120 aus einem wenigstens teilweise elastischen Kunststoffmaterial zu fertigen. Eine Dreh-, Schraub- bzw. Steckverbindung, welche beispielsweise in Kombination in Form eines Bajonettverschlusses realisiert sein kann, ist ebenfalls denkbar.

Im dargestellten Ausführungsbeispiel schnappen vorstehende Rastzungen eines Mikrolinsenarrays in entsprechende Aufnahmevorsprünge ein, die im Randbereich einer Zylinderlinse 116 angeordnet sind. Eine ähnliche Kombinationsmöglichkeit ist auch für eine Vielzahl von anderen ersten bzw. zweiten optischen Mitteln 110 bzw. 120 denkbar.

Darüber hinaus zeigt das Ausführungsbeispiel von Figur 5 noch weitere Gestaltungsmöglichkeiten einer kompakten Anordnung 100 zur Erzeugung eines Lichtfeldes 150 in einer Objektebene 1000. Die LED-Lichtquelle 130 umfasst in diesem Fall eine Anordnung mehrerer LED-Leuchtmittel 131, die auf einer Trägerplatine 132 angeordnet sind. Die Platine weist dabei Befestigungsmittel 133 auf, in diesem Fall mehrere Bohrungen, sodass diese als Befestigungspunkte für erste optische Mittel 110 dienen können.

Besonders vorteilhaft verfügen dann die ersten optischen Mittel 110 über korrespondierende Befestigungsmittel 113 - beispielsweise Aufnahmen für Schrauben, die eine bevorzugt reversibel lösbare Verbindung der ersten optischen Mittel 110 mit der LED-Lichtquelle 130 bzw. in diesem Fall der zugeordneten Trägerplatine verwirklichen.

In Kombination zeigt Figur 5 also eine Anordnung 100 zur Erzeugung eines Lichtfeldes 150 in einer Objektebene 1000, die eine zusammenhängende Baugruppe aus LED-Lichtquelle 130, ersten optischen Mitteln 110 und zweiten optischen Mitteln 120 repräsentiert.

Die erfindungsgemäß vorgesehene Verwendung einer LED-Lichtquelle 130 bringt es mit sich, dass Mittel zur Energieversorgung der LED-Lichtquelle 130 beispielsweise zur Aufrechterhaltung einer konstanten Beleuchtungsstärke oder eines Farbortes vorzugsweise regelbar bzw. einstellbar ausgestaltet sind. Beispielsweise könnte dies durch eine pulsbreitenmodulierbare Energieversorgung der LED-Lichtquelle 130 erreicht sein.

Dazu ist es notwendig, eine Steuer- bzw. Regelgröße zu ermitteln, die Eingang in eine Steuerungs- bzw. Regelungsvorrichtung der Mittel zu Energieversorgung findet. Insbesondere ist es vorteilhaft, wenn die Steuer- bzw. Regelgröße in der Art gewählt wird, dass alterungsbedingte Effekte der LED-Lichtquelle 130 sowie von der kontinuierlichen Betriebsdauer bestimmte Abweichungen der Lichtabgabe in der Steuer- bzw. Regelgröße erfasst werden.

Die Steuer- bzw. Regelgröße ist dabei vorzugsweise ein Maß für den Farbort des von der LED-Lichtquelle 130 abgestrahlten Lichts. Bevorzugt sind zugeordnete Sensormittel 160 dazu ausgebildet diese Steuer- bzw. Regelungsgröße zu ermitteln. Die Steuer- bzw. Regelungsvorrichtung ist dabei dazu ausgebildet, die Abweichung der Regelungsgröße von einem Sollwert, beispielsweise durch eine geeignete Stromnachregelung der LED-Lichtquelle 130 zu kompensieren, so dass die Lichtabgabe einem bestimmten Farbort entspricht. Beispielsweise kann es sich bei dem Maß um eine Temperatur, einen Temperaturgradienten, die Strom-, Spannungs- bzw. Energieaufnahme der LED-Lichtquelle 130 oder ein optisches Maß handeln. Neben der Möglichkeit ein optisches Maß durch Sensormittel 160 zu bestimmen, die unmittelbar an die LED-Lichtquelle 130 angrenzen, ist eine bevorzugte Ausführungsform zur Bestimmung eines optischen Maßes im Folgenden gezeigt.

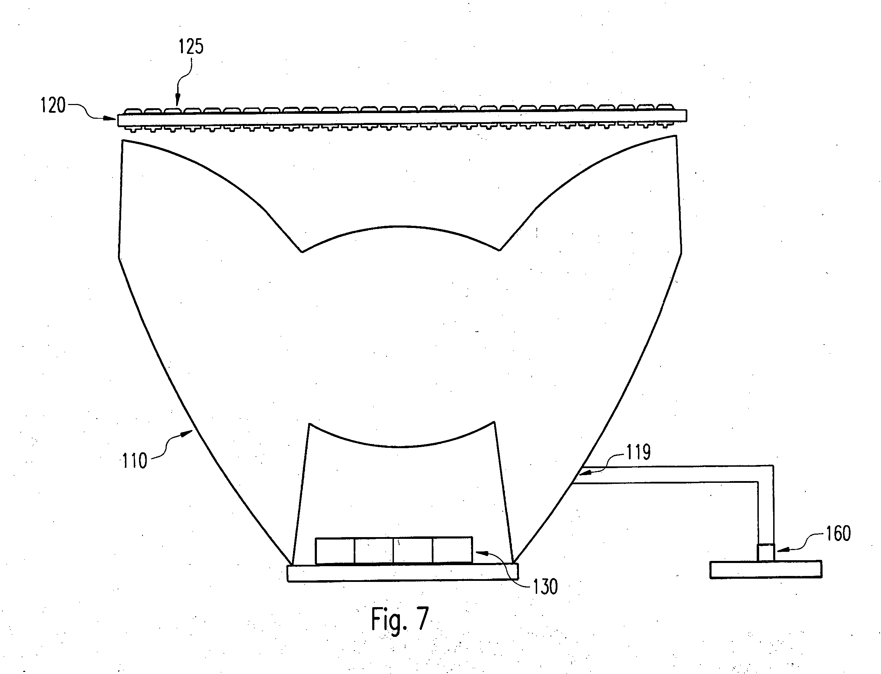

In einem in Figur 7 dargestellten Ausführungsbeispiel sind die ersten optischen Mittel 110 dazu ausgebildet, einen Anteil des von der LED-Lichtquelle 130 abgestrahlten Lichts aus dem Lichtweg von der LED-Lichtquelle 130 zur Objektebene 1000 auszukoppeln. Jedoch ist denkbar, dies beispielsweise auch durch die zweiten optischen Mittel 120 zu realisieren.

Dazu kann vorgesehen sein, dass die ersten oder zweiten optischen Mittel 110 bzw. 120 entsprechende Auskoppelflächen 119 aufweisen, beispielsweise mit einer Lücke in einer Verspiegelung oder einem Oberflächenabschnitt, der dazu ausgebildet ist Totalreflexion für Licht der LED-Lichtquelle 130 zu unterdrücken.

Vorzugsweise erfolgt die Auskoppelung mit Hilfe eines Lichtleiters 115. Beispielsweise kann der Lichtleiter 115 mit den ersten oder zweiten optischen Mitteln 110 bzw. 120 und den Sensormitteln 160 verbunden sein. Dabei handelt es sich bevorzugt um einen flexiblen Lichtleiter 115, jedoch sind auch starre Ausführungen denkbar.

In dem in Figur 7 dargestellten Ausführungsbeispiel ist der Lichtleiter direkt mit der Außenseite der zylinderartigen Linse 116 verbunden, beispielsweise durch eine einstückige Ausführung oder eine Klebe- bzw. Aufschmelzverbindung. Bevorzugt weist der Lichtleiter ein optisch dichteres Material auf als die ersten oder zweiten optischen Mittel 110 bzw. 120, insbesondere im Bereich der Auskoppelflächen 119.

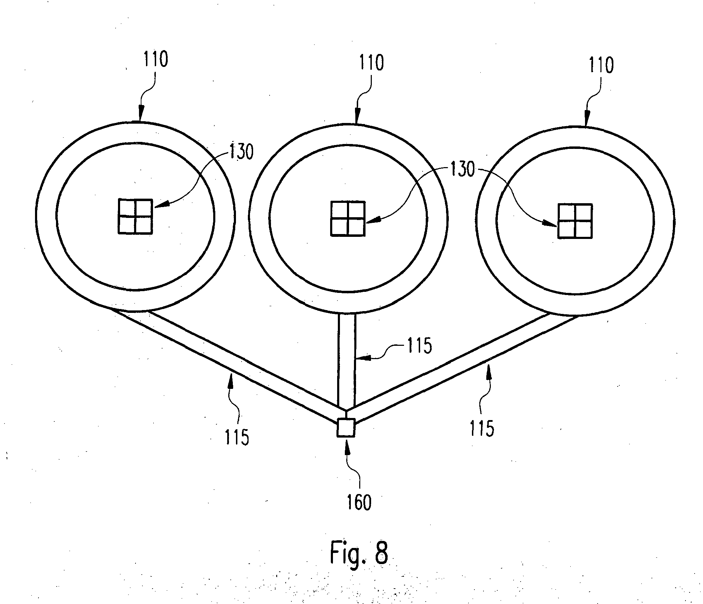

Figur 8 zeigt eine Weiterbildung der Erfindung, dabei sind in einer Behandlungsleuchte 500 mehrere Anordnungen 100 zur Erzeugung eines Lichtfelds 150 in einer Objektebene 1000 vorgesehen. Vorzugsweise sind gemeinsame Sensormittel 160 mit jeder dieser Anordnungen 100 verbunden, im Fall von optischen Sensormitteln beispielsweise über einen Lichtleiter 115 oder im Fall von thermosensitiven Sensormitteln auch über einen Wärmeleiter. Das dargestellte Ausführungsbeispiel zeigt die Kombination mehrerer Lichtleiter 115 mit gemeinsamen Sensormitteln 160, wobei jeder Lichtleiter Licht einer Anordnung 100 zur Erzeugung eine Lichtfeldes 150 in einer Objektebene 1000 zu den gemeinsamen Sensormitteln 160 leitet. Die Sensormittel 160 ermitteln dann die bereits angesprochene Steuer- bzw. Regelgröße zur Steuerung der Energieversorgung mehrerer LED-Lichtquellen 130.

Die Ankopplung von Sensormitteln 160 kann beispielsweise auch die Verwendung von Prismen umfassen. Bevorzugt können die Prismen so orientiert sein, dass das Licht mehrerer LED-Lichtquellen 130 zu den Sensormitteln geleitet wird. Beispielsweise kann dies mit Hilfe eines Prismas mit mehreren Lichteinkoppelflächen verwirklicht sein.

Neben mehreren LED-Lichtquellen 130, wie beispielsweise in Figur 1 oder 8 dargestellt, kann vorgesehen sein, dass die Behandlungsleuchte 500 auch konventionelle Lichtquellen aufweist, beispielsweise in Form von Gasentladungslampen, Leuchtstoffröhren, Dampflampen, Glühbirnen, also insbesondere nicht halbleiterbasierte Lichtquellen.

In einer Weiterbildung des Erfindungsgedankens, sind mehrere Lichtquellen dazu ausgebildet in einer Objektebene 1000 ein gemeinsames Lichtfeld 150 zu erzeugen. Vorzugsweise überlagen bzw. beleuchten die Lichtquellen in der Objektebene 1000 ausschließlich das gemeinsame Lichtfeld 150.

Bevorzugt sind die Lichtquellen dann in einem Abstand zueinander angeordnet, sodass ein Öffnungswinkel von Verbindungslinien zwischen einem Zentrum der Lichtquelle zum Zentrum des Lichtfeldes 150 für benachbarte Lichtquellen jeweils wenigstens 10 Grad beträgt, bevorzugt wenigstens 15 Grad und besonders bevorzugt wenigstens 30 Grad, wobei diese Angaben für eine normgerechte Entfernung der Behandlungsleuchte 500 zum Lichtfeld 150 in der Objektebene 1000 von 700mm zu verstehen sind.

Mit Hilfe der Anordnung mehrerer Lichtquellen in der Leuchte kann so die Unempfindlichkeit gegenüber Abschattungseffekten weiter optimiert werden. Beispielsweise bringt die beschriebene beabstandete Anordnung der Lichtquellen den Vorteil mit sich, dass der Raumwinkelbereich des auf das Lichtfeld 150 einfallenden Lichts durch mehrere Lichtquellen vergrößert wird. Für den Fall, dass die weiteren Lichtquellen, jeweils dazu ausgebildet sind, möglicherweise abgesehen von der Gesamtbeleuchtungsintensität, ein normgerechtes Lichtfeld 150 zu erzeugen, ergibt sich eine weitere Verbesserung der Bewegungsfreiheit des Behandelnden. Die weiteren Lichtquellen könnten in diesem Fall jeweils durch eine Anordnung 100 zur Erzeugung eines Lichtfeldes 150 in einer Objektebene 1000 gebildet sein.

Letztendlich wird durch die vorliegende Erfindung eine medizinische bzw. zahnmedizinische Behandlungsleuchte 500 geschaffen, die eine optimale Ausleuchtung der Behandlungsstelle erlaubt und gleichzeitig den Bewegungsspielraum des Behandelnden drastisch erhöht. Insbesondere wird eine optimierte Unempfindlichkeit gegenüber Abschattungen im Lichtweg zwischen Behandlungsleuchte 500 und Objektebene 1000 in einer kompakten Leuchte 500 realisiert, die zusätzliche Freiheitsgrade in der Positionierung der Leuchte 500 erlaubt.

Abschließend ist besonders drauf hinzuweisen, dass die Kombination von Merkmalen verschiedener Ausführungsbeispiele oder in Figuren offenbarter Merkmale erfindungsgemäß nicht ausgeschlossen ist.

## Patentansprüche

1. Zahnärztliche Behandlungsleuchte (500),
mit einer Anordnung (100) zur Erzeugung eines Lichtfelds (150) in einer Objektebene (1000),
aufweisend
• eine LED-Lichtquelle (130),
• erste optische Mittel (110), vorzugsweise zur Kollimation des von der LED-Lichtquelle (130) abgestrahlten Lichts,
• sowie, im Lichtweg nachfolgend angeordnet, zweite optische Mittel (120),
wobei die zweiten optischen Mittel (120) dazu ausgebildet sind, mehrere Teilstrahlenbündel des von der LED-Lichtquelle (130) abgegebenen Lichts so umzuformen, dass jedes Teilstrahlenbündel in der Objektebene (1000) das gesamte Lichtfeld (150) überlagert,
wobei die LED-Lichtquelle (130) eine im Wesentlichen punktförmige Lichtquelle bildet,
und wobei die zweiten optischen Mittel (120) eine Vielzahl von Linsen (125) umfassen, wobei jede Linse (125) jeweils ein Teilstrahlenbündel des von der im Wesentlichen punktförmigen LED-Lichtquelle (130) abgegebenen Lichts auf das gesamte Lichtfeld (150) in der Objektebene (1000) projiziert.

2. Zahnärztliche Behandlungsleuchte (500),
mit einer Anordnung (100) zur Erzeugung eines Lichtfelds (150) in einer Objektebene (1000),
aufweisend
• eine LED-Lichtquelle (130),
• erste optische Mittel (110), vorzugsweise zur Kollimation des von der LED-Lichtquelle (130) abgestrahlten Lichts,
• sowie, im Lichtweg nachfolgend angeordnet, zweite optische Mittel (120),
wobei die zweiten optischen Mittel (120) dazu ausgebildet sind, mehrere Teilstrahlenbündel des von der LED-Lichtquelle (130) abgegebenen Lichts so umzuformen, dass sich die Teilstrahlenbündel in der Objektebene (1000) überlagern, wobei die Kombination der Teilstrahlenbündel das gesamte Lichtfeld (150) bildet,
wobei die LED-Lichtquelle (130) eine im Wesentlichen punktförmige Lichtquelle bildet,
und wobei die zweiten optischen Mittel (120) eine Vielzahl von Linsen (125) umfassen, wobei die Linsen (125) dazu ausgebildet sind, die Teilstrahlenbündel des von der im Wesentlichen punktförmigen LED-Lichtquelle (130) abgegebenen Lichts so auf das Lichtfeld (150) in der Objektebene (1000) zu projizieren, dass sich wenigstens zwei Teilstrahlenbündel überlappen.

3. Zahnärztliche Behandlungsleuchte (500) nach Anspruch 1 oder 2,
**dadurch gekennzeichnet,**
**dass** die Vielzahl von Linsen (125) als einstückiges Bauteil ausgeführt ist, vorzugsweise als Folie, vorzugsweise als Mikrolinsenarray.

4. Zahnärztliche Behandlungsleuchte (500) nach einem der vorhergehenden Ansprüche,
**dadurch gekennzeichnet,**
**dass** das Lichtfeld (150) im Wesentlichen die Form eines Polygonzuges, insbesondere eines Rechtecks, eines Trapezes, einer Raute oder eines Hexagons hat.

5. Zahnärztliche Behandlungsleuchte (500) nach einem der vorhergehenden Ansprüche,
**dadurch gekennzeichnet,**
**dass** die LED-Lichtquelle (130) mehrere LEDs umfasst, welche vorzugsweise dazu ausgebildet sind, verschiedene Lichtfarben abzustrahlen.

6. Zahnärztliche Behandlungsleuchte (500) nach Anspruch 5,
**dadurch gekennzeichnet,**
**dass** die LED-Lichtquelle (130) eine LED-Gruppe bzw. ein LED-Cluster ist.

7. Zahnärztliche Behandlungsleuchte (500) nach einem der vorhergehenden Ansprüche,
**dadurch gekennzeichnet,**
**dass** die Anordnung zur Erzeugung eines Lichtfelds (100) dazu ausgebildet ist, ein Lichtfeld (150) zu erzeugen, das in der Objektebene (1000) Bereiche verschiedener Intensitäten (150, 151, 152) aufweist.

8. Zahnärztliche Behandlungsleuchte (500) nach einem der vorhergehenden Ansprüche,
**dadurch gekennzeichnet,**
**dass** die Anordnung Erzeugung eines Lichtfelds (100) als zusammenhängende Baugruppe ausgeführt ist, wobei insbesondere die zweiten optischen Mittel (120) mit den ersten optischen Mitteln (110) verbunden sind.

9. Zahnärztliche Behandlungsleuchte (500) nach einem der vorhergehenden Ansprüche,
**dadurch gekennzeichnet,**
**dass** die ersten optischen Mittel (110) dazu ausgebildet sind, einen Anteil des von der LED-Lichtquelle (130) abgegebenen Lichts aus dem Lichtweg zu den zweiten optischen Mitteln (120) auszukoppeln, wobei vorzugsweise die Auskopplung mit Hilfe eines Lichtleiters (115) erfolgt.

10. Zahnärztliche Behandlungsleuchte (500) nach einem der vorhergehenden Ansprüche,
**dadurch gekennzeichnet,**
**dass** die zahnärztliche Behandlungsleuchte Mittel zur Bestimmung des Farbortes des abgegebenen Lichts aufweist, welche vorzugsweise außerhalb des Lichtwegs von der LED-Lichtquelle zur Objektebene angeordnet sind.

11. Zahnärztliche Behandlungsleuchte (500) nach einem der vorhergehenden Ansprüche,
**dadurch gekennzeichnet,**
**dass** die zahnärztliche Behandlungsleuchte Mittel zur Regelung und Steuerung des Farbortes des abgegebenen Lichts aufweist.

12. Zahnärztliche Behandlungsleuchte (500) nach einem der vorhergehenden Ansprüche,
**dadurch gekennzeichnet,**
**dass** die Behandlungsleuchte (500) wenigstens eine weitere Lichtquelle aufweist.

13. Zahnärztliche Behandlungsleuchte (500) nach Anspruch 12,
**dadurch gekennzeichnet,**
**dass** die weitere Lichtquelle eine Anordnung (100) zur Erzeugung eines Lichtfeldes (150) in einer Objektebene (1000) ist.

14. Zahnärztliche Behandlungsleuchte (500) nach einem der vorhergehenden Ansprüche 12 oder 13,
**dadurch gekennzeichnet,**
**dass** die Lichtquellen ein gemeinsames Lichtfeld (150) in der Objektebene (1000) erzeugen.

15. Zahnärztliche Behandlungsleuchte (500) nach Anspruch 14,
**dadurch gekennzeichnet,**
**dass** die Lichtquellen in der Objektebene (1000) ausschließlich das gemeinsame Lichtfeld (150) beleuchten.

## Claims

1. Dental treatment light (500),
having an arrangement (100) for generating a light field (150) in an object plane (1000),
having
- an LED light source (130),
- first optical means (110), preferably for collimating the light emitted from the LED light source (130),
- and also, arranged downstream in the light path, second optical means (120),
wherein the second optical means (120) are designed to reshape multiple partial beam bundles of the light emitted from the LED light source (130) so that each partial beam bundle overlays the entire light field (150) in the object plane (1000),
wherein the LED light source (130) forms a substantially punctiform light source,
and wherein the second optical means (120) comprise a plurality of lenses (125), wherein each lens (125) projects one partial beam bundle in each case of the light emitted from the substantially punctiform LED light source (130) onto the entire light field (150) in the object plane (1000).

2. Dental treatment light (500),
having an arrangement (100) for generating a light field (150) in an object plane (1000),
having
- an LED light source (130),
- first optical means (110), preferably for collimating the light emitted from the LED light source (130),
- and also, arranged downstream in the light path, second optical means (120),
wherein the second optical means (120) are designed to reshape multiple partial beam bundles of the light emitted from the LED light source (130) so that the partial beam bundles are overlaid in the object plane (1000),
wherein the combination of the partial beam bundles forms the entire light field (150),
wherein the LED light source (130) forms a substantially punctiform light source,
and wherein the second optical means (120) comprise a plurality of lenses (125), wherein the lenses (125) are designed to project the partial beam bundles of the light emitted from the substantially punctiform LED light source (130) onto the light field (150) in the object plane (1000) so that at least two partial beam bundles overlap.

3. Dental treatment light (500) according to Claim 1 or 2,
**characterized in that** the plurality of lenses (125) is embodied as an integral component, preferably as a film, preferably as a microlens array.

4. Dental treatment light (500) according to any one of the preceding claims,
**characterized in that** the light field (150) substantially has the form of a polygon traverse, in particular a rectangle, a trapezoid, a rhomboid, or a hexagon.

5. Dental treatment light (500) according to any one of the preceding claims,
**characterized in that** the LED light source (130) comprises multiple LEDs, which are preferably designed to emit different light colours.

6. Dental treatment light (500) according to Claim 5,
**characterized in that** the LED light source (130) is an LED group or an LED cluster.

7. Dental treatment light (500) according to any one of the preceding claims,
**characterized in that** the arrangement for generating a light field (100) is designed to generate a light field (150) which has regions of different intensities (150, 151, 152) in the object plane (1000).

8. Dental treatment light (500) according to any one of the preceding claims,
**characterized in that** the arrangement for generating a light field (100) is embodied as a coherent assembly, wherein in particular the second optical means (120) are connected to the first optical means (110).

9. Dental treatment light (500) according to any one of the preceding claims,
**characterized in that** the first optical means (110) are designed to decouple a portion of the light emitted from the LED light source (130) out of the light path to the second optical means (120), wherein the decoupling is preferably performed with the aid of an optical waveguide (115).

10. Dental treatment light (500) according to any one of the preceding claims,
**characterized in that** the dental treatment light has means for determining the colourimetric locus of the emitted light, which are preferably arranged outside the light path from the LED light source to the object plane.

11. Dental treatment light (500) according to any one of the preceding claims,
**characterized in that** the dental treatment light has means for regulating and controlling the colourimetric locus of the emitted light.

12. Dental treatment light (500) according to any one of the preceding claims,
**characterized in that** the treatment light (500) has at least one further light source.

13. Dental treatment light (500) according to Claim 12,
**characterized in that** the further light source is an arrangement (100) for generating a light field (150) in an object plane (1000).

14. Dental treatment light (500) according to any one of preceding Claims 12 or 13,
**characterized in that** the light sources generate a shared light field (150) in the object plane (1000).

15. Dental treatment light (500) according to Claim 14,
**characterized in that** the light sources exclusively illuminate the shared light field (150) in the object plane (1000).

## Revendications

1. Eclairage d'examen (500) médico-dentaire,
comprenant un ensemble (100) pour la production d'un champ de lumière (150) dans un plan d'objet (1000),
présentant
- une source de lumière à DEL (130),
- des premiers moyens optiques (110), de préférence servant à collimater la lumière diffusée par la source de lumière à DEL (130),
- ainsi que, des deuxièmes moyens optiques (120), disposés à la suite sur le trajet de lumière, sachant que les deuxièmes moyens optiques (120) sont réalisés afin de mettre en forme plusieurs faisceaux de rayons partiels de la lumière émise par la source de lumière à DEL (130) de telle manière que chaque faisceau de rayons partiels se superpose au champ de lumière (150) total dans le plan d'objet (1000),
sachant que la source de lumière à DEL (130) forme une source de lumière essentiellement ponctuelle,
et sachant que les deuxièmes moyens optiques (120) comprennent une pluralité de lentilles (125), sachant que chaque lentille (125) projette respectivement un faisceau de rayons partiels de la lumière émise par la source de lumière à DEL (130) essentiellement de forme ponctuelle sur le champ de lumière (150) total dans le plan d'objet (1000).

2. Eclairage d'examen (500) médico-dentaire
comprenant un ensemble (100) pour la production d'un champ de lumière (150) dans un plan d'objet (1000),
présentant
- une source de lumière à DEL (130),
- des premiers moyens optiques (110), de préférence servant à collimater la lumière diffusée par la source de lumière à DEL (130),
- ainsi que, des deuxièmes moyens optiques (120), disposés à la suite sur le trajet de lumière, sachant que les deuxièmes moyens optiques (120) sont réalisés afin de mettre en forme plusieurs faisceaux de rayons partiels de la lumière émise par la source de lumière à DEL (130) de telle manière que les faisceaux de rayons partiels se superposent dans le plan d'objet (1000), sachant que la combinaison des faisceaux de rayons partiels forme le champ de lumière (150) total,
sachant que la source de lumière à DEL (130) forme une source de lumière essentiellement ponctuelle,
et sachant que les deuxièmes moyens optiques (120) comprennent une pluralité de lentilles (125), sachant que les lentilles (125) sont réalisées afin de projeter les faisceaux de rayons partiels de la lumière émise par la source de lumière à DEL (130) essentiellement de forme ponctuelle de telle manière sur le champ de lumière (150) dans le plan d'objet (1000) qu'au moins deux faisceaux de rayons partiels se chevauchent.

3. Eclairage d'examen (500) médico-dentaire selon la revendication 1 ou 2,
**caractérisé en ce**
**que** la pluralité de lentilles (25) est réalisée sous la forme d'un composant d'un seul tenant, de préférence sous la forme d'un film, de préférence sous la forme d'un micro-réseau de lentilles.

4. Eclairage d'examen (500) médico-dentaire selon l'une quelconque des revendications précédentes,
**caractérisé en ce**
**que** le champ de lumière (150) a essentiellement la forme d'une ligne polygonale, en particulier d'un rectangle, d'un trapèze, d'un losange ou d'un hexagone.

5. Eclairage d'examen (500) médico-dentaire selon l'une quelconque des revendications précédentes,
**caractérisé en ce**
**que** la source de lumière à DEL (130) comprend plusieurs DEL, qui sont réalisées de préférence afin de diffuser différentes couleurs de lumière.

6. Eclairage d'examen (500) médico-dentaire selon la revendication 5,
**caractérisé en ce**
**que** la source de lumière à DEL (130) est un groupe de DEL ou un cluster de DEL.

7. Eclairage d'examen (500) médico-dentaire selon l'une quelconque des revendications précédentes,
**caractérisé en ce**
**que** l'ensemble servant à produire un champ de lumière (100) est réalisé afin de produire un champ de lumière (150), qui présente, dans le plan d'objet (1000), des zones d'intensités différentes (150, 151, 152).

8. Eclairage d'examen (500) médico-dentaire selon l'une quelconque des revendications précédentes,
**caractérisé en ce**
**que** l'ensemble servant à produire un champ de lumière (100) est réalisé sous la forme d'un groupe modulaire rattaché, sachant qu'en particulier les deuxièmes moyens optiques (120) sont reliés aux premiers moyens optiques (110).

9. Eclairage d'examen (500) médico-dentaire selon l'une quelconque des revendications précédentes,
**caractérisé en ce**
**que** les premiers moyens optiques (110) sont réalisés afin de découpler une partie de la lumière émise par la source de lumière à DEL (130) hors du trajet de lumière en direction des deuxièmes moyens optiques (120), sachant que de préférence le découplage est effectué à l'aide d'un guide de lumière (115).

10. Eclairage d'examen (500) médico-dentaire selon l'une quelconque des revendications précédentes,
**caractérisé en ce**
**que** l'éclairage d'examen médico-dentaire présente des moyens servant à déterminer la localisation chromatique de la lumière émise, lesquels sont disposés de préférence en dehors du trajet de lumière allant de la source de lumière à DEL au plan d'objet.

11. Eclairage d'examen (500) médico-dentaire selon l'une quelconque des revendications précédentes,
**caractérisé en ce**
**que** l'éclairage d'examen médico-dentaire présente des moyens servant à réguler et à commander la localisation chromatique de la lumière émise.

12. Eclairage d'examen (500) médico-dentaire selon l'une quelconque des revendications précédentes,
**caractérisé en ce**
**que** l'éclairage d'examen (500) présente au moins une autre source de lumière.

13. Eclairage d'examen (500) médico-dentaire selon la revendication 12,
**caractérisé en ce**
**que** l'autre source de lumière est un ensemble (100) servant à produire un champ de lumière (150) dans un plan d'objet (1000).

14. Eclairage d'examen (500) médico-dentaire selon l'une quelconque des revendications 12 ou 13,
**caractérisé en ce**
**que** les sources de lumière produisent un champ de lumière (150) commun dans le plan d'objet (1000).

15. Eclairage d'examen (500) médico-dentaire selon la revendication 14,
**caractérisé en ce**
**que** les sources de lumière éclairent dans le plan d'objet (1000) exclusivement le champ de lumière (150) commun.
